# EUROPEAN PATENT APPLICATION

(11) **EP 1 976 257 A1**
(43) Date of publication of application: **01.10.2008**
(21) Application number: 08005627.8
(22) Date of filing: 26.03.2008
(51) Int. Cl.: H04N 1/00, H04N 1/04

(54) **Radiographic film reading device**

(30) Priority: 27.03.2007 CN 200710088491
(71) Applicant: Gwowei Technology Co., Ltd., Taipei City 111 Taiwan (CN)
(72) Inventor: Yang, Ting-Shung, Taipei City 111 (TW); Wu, Ying-Hsing, Taipei City 111 (TW)
(74) Representative: UEXKÜLL & STOLBERG

(57) **Abstract**

A radiographic film reading device is used in clinic dental diagnosis and treatment. The radiographic film reading device includes a film holder, a main body, a substrate and a backlight module. The film holder supports a radiographic film thereon. The main body has a receptacle for accommodating the film holder therein. The substrate is disposed inside the main body and has an optical sensor. The backlight module is disposed inside the main body for emitting a light beam from bottom to top. The light beam penetrates through the radiographic film and is then imaged onto the optical sensor of the substrate, so that the image of the radiographic film is processed into a digital form.

## Description

### FIELD OF THE INVENTION

The present invention relates to a radiographic film reading device, and more particularly to a radiographic film reading device applied to clinic dental diagnosis and treatment.

### BACKGROUND OF THE INVENTION

In the conventional clinic dental diagnosis and treatment, root canal therapy is one of the most common therapeutic procedures. The outcomes of the root canal therapy are mainly dependent on the dentist's skill and the medical appliances. Moreover, it is very important to realize the information about the infected sites of the patient's cavity before and after the root canal therapy is carried out. For example, before the dentist drills into the pulp chamber, the length of the root canal should be precisely measured in order to ensure that the infected pulp and debris are removed out of the root canal. After the infected pulp is removed, the length of the root canals is also important for confirming discriminating whether the inert material for root canal filling reaches the apical area of the root canal. After root canal filling, the root canal is subject to X-rays to ensure that the tooth is not having any problems.

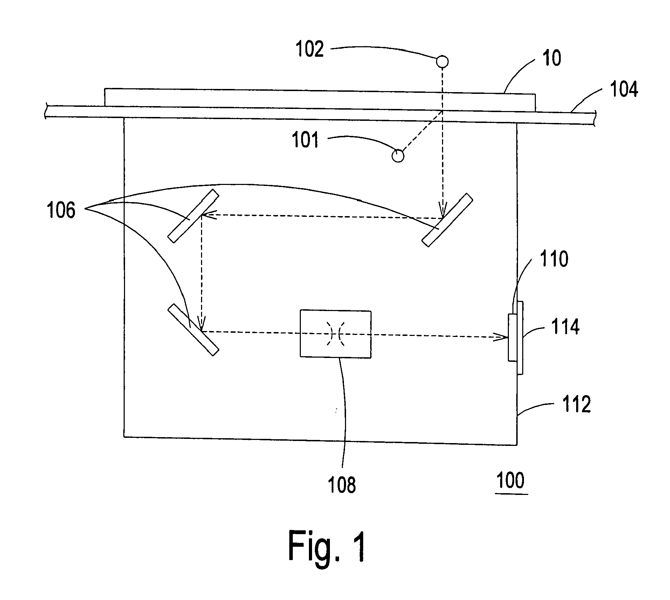

In the earlier stage of root canal therapy, dentists use x-rays to obtain images of their patients' infected sites to aid in diagnosis of the patients. For example, a piece of radiographic film is placed in the patient's mouth and then an x-ray beam is projected onto the radiographic film through the tooth. Afterwards, an image scanner is used to process the image of the radiographic film, thereby assisting in reading the radiographic film. Referring to Fig. 1, a schematic cross-sectional view of a conventional image scanner is illustrated. As shown in Fig. 1, both reflective light source 101 and penetrative light source 102 are provided below and above the transparent platform 104 of the image scanner 100, respectively, and selectively turned on for different scanning purposes. For reflective-type scanning operation, it is the reflective light source 101 turned on while the penetrative light source 102 is turned off. The light emitted by the light source 102 is reflected by the radiographic film 10 placed on the transparent platform 104. The reflective image then enters the carriage 112, guided by a reflective mirror set 106, focused by a lens set 108 and processed by an optical sensor 110 mounted on a circuit substrate 114. On the other hand, for penetrative-type scanning operation, it is the penetrative light source 102 turned on while the reflective light source 101 is turned off. The light emitted by the light source 102 penetrates through the radiographic film 10 and then enters the carriage 112. The penetrative image is also processed by the elements 106, 108 and 110 in the carriage 112 to generate electric signals corresponding to the image of the scanned radiographic film 10. The electric signals are then processed into a digital form and transmitted to a computer for verifying the root canal length. As known, the process of digitalizing the radiographic film is very complicated. Moreover, the image of the scanned radiographic film is usually too dark or too blurred for the naked eye. Under this circumstance, the dentist fails to clearly read out the information about the infected site and the root canal length, and thus the therapeutic effect is impaired.

For overcoming the above-described disadvantages, there is a need of providing an improved radiographic film reading device for accurately reading out the information about the infected site of the patient's oral cavity in a simplified and cost-effective manner.

### SUMMARY OF THE INVENTION

It is an object of the present invention to provide a radiographic film reading device for use in clinic dental diagnosis and treatment. After the light beams from a backlight module penetrate through a radiographic film, which is supported on a film holder and inserted into a receptacle, the penetrative light beams are imaged onto an optical sensor of a substrate to be process into digitalized data.

Another object of the present invention provides a radiographic film reading device having many advantages such as miniaturization, easy manipulation, high performance and cost-effectiveness.

In accordance with an aspect of the present invention, there is provided a radiographic film reading device for use in clinic dental diagnosis and treatment. The radiographic film reading device includes a film holder, a main body, a substrate and a backlight module. The film holder supports a radiographic film thereon. The main body has a receptacle for accommodating the film holder therein. The substrate is disposed inside the main body and has an optical sensor. The backlight module is disposed inside the main body for emitting a light beam from bottom to top. The light beam penetrates through the radiographic film and is then imaged onto the optical sensor of the substrate, so that the image of the radiographic film is processed into a digital form.

In an embodiment, the film holder includes a window, and a transparent interface is embedded in the window for allowing the light beam to penetrate therethrough.

In an embodiment, the transparent interface has standardized graduations thereon.

Preferably, the width of an entrance of the receptacle is equal to or greater than that of the film holder.

In an embodiment, the backlight module includes a plurality of lamps for providing the light beam, and a base for supporting the lamps thereon.

In an embodiment, the backlight module further includes a diffuser plate and a multi-layered structure. The diffuser plate is disposed above the lamps. The multi-layered structure is formed on the diffuser plate and includes one or more diffusing layers, one or more brightness enhancement layers and one or more protective layers.

In an embodiment, a liquid crystal panel is arranged on the backlight module for allowing the light beam to penetrate therethrough and supporting the film holder.

In an embodiment, the radiographic film reading device further includes a transmission line.

In an embodiment, the transmission line has a first end coupled to the main body and a second end coupled to a host computer.

Preferably, the transmission line is a universal serial bus (USB) transmission line.

The above contents of the present invention will become more readily apparent to those ordinarily skilled in the art after reviewing the following detailed description and accompanying drawings, in which:

### BRIEF DESCRIPTION OF THE DRAWINGS

Fig. 1 is a schematic cross-sectional view of a conventional image scanner;

Fig. 2(a) is a schematic perspective view of a radiographic film reading device according to a preferred embodiment of the present invention;

Fig. 2(b) is a film holder used in the radiographic film reading device of Fig. 2(a); and

Fig. 3 is a schematic exploded view illustrating the inner components of the radiographic film reading device of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

As previously described, the process of reading out the radiographic film according to prior art is very complicated and the image quality is not satisfactory for accurately verifying the infected sites. For overcoming these disadvantages, the present invention provides a radiographic film reading device for use in clinic dental diagnosis and treatment. The radiographic film reading device of the present invention includes a main body having a receptacle for receiving a film holder therein. A radiographic film is supported on the film holder. The light beams which are emitted from the backlight module penetrate through the radiographic film and are imaged onto the optical sensor to be process into digitalized data. The digitalized data may be transmitted to the host computer for storage or further processing.

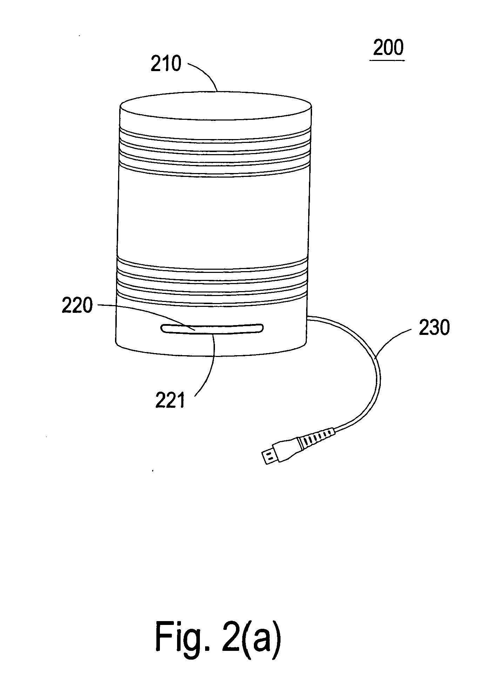

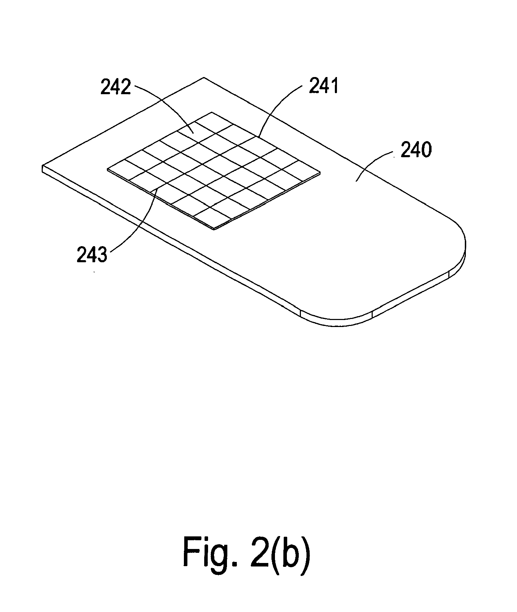

Fig. 2(a) is a schematic perspective view of a radiographic film reading device according to a preferred embodiment of the present invention. Fig. 2(b) is a film holder used in the radiographic film reading device of Fig. 2(a). Please refer to Figs. 2(a) and 2(b). The radiographic film reading device 200 principally includes a main body 210, a receptacle 220, a transmission line 230 and a film holder 240.

In this embodiment, the main body 210 is substantially an integral casing. The receptacle 220 is formed in the main body 210 and has an entrance 221. The width of the entrance 221 is equal to or greater than that of the film holder 240. The film holder 240 may be inserted and accommodated within the receptacle 220 through the entrance 221. An exemplary transmission line 230 is a universal serial bus (USB) transmission line. A first end of the transmission line 230 is coupled to the main body 210 of the radiographic film reading device 200, and a second end of the transmission line 230 is coupled to a host computer (not shown). After the image of the radiographic film is processed by the circuitry within the main body 210 into a digital form, the digitalized data may be transmitted through the transmission line 230 to the host computer for storage or further processing.

The film holder 240 shown in Fig. 2(b) is a streamline-shaped metallic plate for placing thereon a radiographic film in a dry or wet state. The film holder 240 further includes a window 241. A transparent interface 242 is embedded in the window 241 for allowing a light to penetrate therethrough from bottom to top. Moreover, the transparent interface 242 has standardized graduations 243 for facilitating accurately reading the image of the radiographic film.

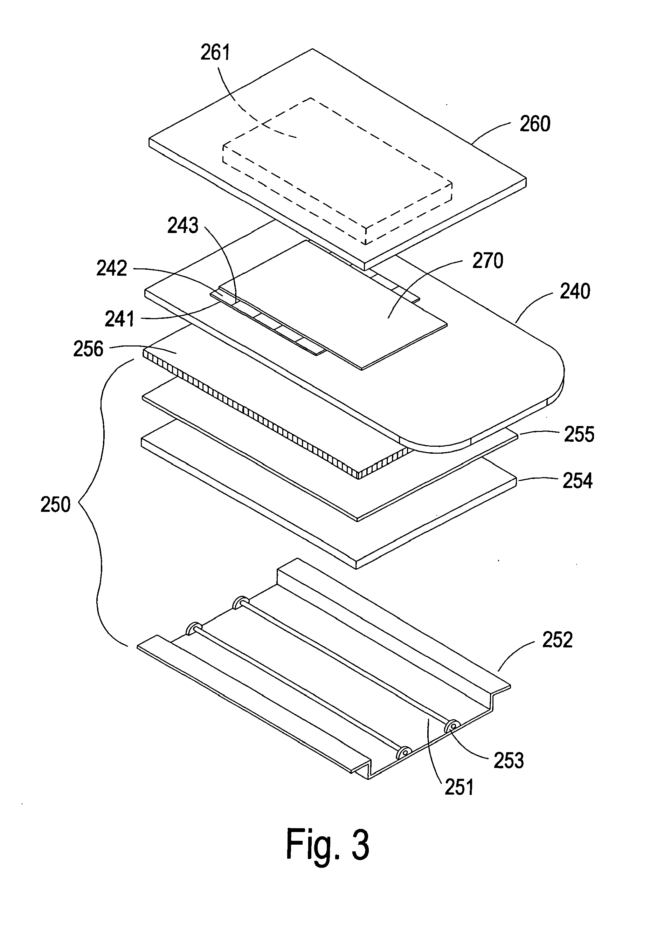

Fig. 3 is a schematic exploded view illustrating the inner components of the radiographic film reading device of the present invention. Within the radiographic film reading device, a backlight module 250 and a substrate 260 are further included. The backlight module 250 includes a plurality of lamps 251, a base 252, several fixing elements 253, a diffuser plate 254 and an optical material layer 255. The lamps 251 are used as light sources. In this embodiment, the lamps 251 are arranged in parallel with each other. It is noted that, however, those skilled in the art will readily observe that numerous modifications of the arrangement of the lamps 251 may be made while retaining the teachings of the invention. For example, the optical material layer 255 includes a diffuser film, a brightness enhancement film and a protective film. For assembling the backlight module 250, the lamps 251 are supported on the base 252 and fixed by the fixing element 253, and then the diffuser plate 254 and the optical material layer 255 are successively mounted on the base 252 to enclose the lamps 251. After a liquid crystal panel 256 is attached onto the top of the resulting structure, the backlight module 250 is produced.

In a case that the film holder 240 is inserted into the receptacle 220 of the main body 210 through the entrance 221 (see Fig. 2(a)), the film holder 240 is located above the liquid crystal panel 256. During operation of the radiographic film reading device, the light beams emitted by the lamps 251 successively penetrate through the diffuser plate 254, the optical material layer 255, the liquid crystal panel 256 and the radiographic film 270, which is supported on the film holder 240. After penetrating through the radiographic film 270, the light beams are projected onto an optical sensor 261 of the substrate 260. An example of the optical sensor 261 includes a charge coupled device (CCD), the technology of which is well-established and thus redundantly described herein. After the penetrative image of the radiographic film 270 is processed into a digital form, the digitalized data may be transmitted through the transmission line 230 (see Fig. 2(a)) to the host computer for storage or further processing.

In the above embodiments, the light beams which are emitted from the backlight module penetrate through the radiographic film and are imaged onto the optical sensor to be process into digitalized data. The digitalized data may be transmitted to the host computer for storage or further processing. In a case that the radiographic film reading device is applied to clinic dental diagnosis and treatment, the digitalized image will facilitate accurately reading out the information about the infected site of the patient's oral cavity in a simplified and cost-effective manner. Since the transparent interface of the film holder has standardized graduations, lengths, sizes, scales and relative locations of the infected site shown on the image of the radiographic film will be clearly recognized. As a consequence, rules or other similar tools which are commonly used in the prior art may be exempted. Moreover, the radiographic film reading device of the present invention has many advantages such as miniaturization, weight reduction and high performance. Especially, when compared with the conventional radiographic film reading device having an expense of about several hundred thousand NT dollars, the radiographic film reading device of the present invention is much more cost-effective.

From the above description, the light beams which are emitted from the backlight module penetrate through the radiographic film and are imaged onto the optical sensor to be process into digitalized data. In practice, the image of the radiographic film is easily read out by inserting the film holder carrying the radiographic film into the receptacle of the main body. Moreover, the standardized graduations on transparent interface of the film holder may facilitate clearly recognizing the image of the radiographic film. In view of these advantages, the radiographic film reading device of the present invention is applicable to clinic dental diagnosis and treatment.

## Claims

1. A radiographic film reading device for use in clinic dental diagnosis and treatment, **characterized in that** said radiographic film reading device (200) comprises:
a film holder (240) for supporting a radiographic film (270) thereon;
a main body (210) having a receptacle (220) for accommodating said film holder (270) therein;
a substrate (260) disposed inside said main body (210) and having an optical sensor (261); and
a backlight module (250) disposed inside said main body (210) for emitting a light beam from bottom to top, wherein said light beam penetrates through said radiographic film (270) and is then imaged onto said optical sensor (261) of said substrate (260), so that the image of said radiographic film (270) is processed into a digital form.

2. The radiographic film reading device according to claim 1 **characterized in that** said film holder (240) includes a window (241), and a transparent interface (242) is embedded in said window (241) for allowing said light beam to penetrate therethrough.

3. The radiographic film reading device according to claim 2 **characterized in that** said transparent interface (242) has standardized graduations (243) thereon.

4. The radiographic film reading device according to claim 1 **characterized in that** the width of an entrance of said receptacle is equal to or greater than that of said film holder.

5. The radiographic film reading device according to claim 1 **characterized in that** said backlight module (250) includes:
a plurality of lamps (251) for providing said light beam; and
a base (252) for supporting said lamps (251) thereon.

6. The radiographic film reading device according to claim 5 **characterized in that** said backlight module (250) further includes:
a diffuser plate (254) disposed above said lamps (251); and
an optical material layer (255) formed on said diffuser plate (254).

7. The radiographic film reading device according to claim 1 **characterized in that** a liquid crystal panel (256) is arranged on said backlight module (250) for allowing said light beam to penetrate therethrough and supporting said film holder (240).

8. The radiographic film reading device according to claim 1 **characterized in that** said radiographic film reading device (200) further includes a transmission line (230).

9. The radiographic film reading device according to claim 8 **characterized in that** said transmission line (230) has a first end coupled to said main body (210) and a second end coupled to a host computer.

10. The radiographic film reading device according to claim 8 **characterized in that** said transmission line (230) is a universal serial bus (USB) transmission line.
